# EUROPEAN PATENT SPECIFICATION

(11) **EP 3 079 398 B1**
(45) Date of publication and mention of the grant of the patent: **27.06.2018**
(21) Application number: 13900695.1
(22) Date of filing: 30.12.2013
(51) Int. Cl.: H04W 24/10, H04W 84/04, H04W 36/00

(54) **NEIGHBOR CELL MEASUREMENT METHOD AND DEVICE**
NACHBARZELLENMESSVERFAHREN UND -VORRICHTUNG
PROCÉDÉ ET DISPOSITIF DE MESURAGE DE CELLULE VOISINE

(43) Date of publication of application: 12.10.2016
(73) Proprietor: Huawei Technologies Co., Ltd., Longgang District Shenzhen, Guangdong 518129 (CN)
(72) Inventor: LI, Qiang, Shenzhen Guangdong 518129 (CN); XUE, Lixia, Shenzhen Guangdong 518129 (CN); SUN, Jingyuan, Shenzhen Guangdong 518129 (CN)
(74) Representative: Thun, Clemens
(86) International application number: PCT/CN2013/090957
(87) International publication number: WO 2015/100556

(56) References cited:
- WO-A1-2013/007207
- CN-A- 102 685 795
- CN-A- 102 883 408
- CN-A- 103 458 458
- NEW POSTCOM: "CSI-RS based RRM measurement for synchronised new carriers", 3GPP DRAFT; R1-124949, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121112 - 20121116 2 November 2012 (2012-11-02), XP050662670, Retrieved from the Internet: URL:http://www.3gpp.org/ftp/tsg_ran/WG1_RL 1/TSGR1_71/Docs/ [retrieved on 2012-11-02]
- NTT DOCOMO: "Small Cell Discovery for Efficient Small Cell On/Off Operation", 3GPP DRAFT; R1-133457, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716565, Retrieved from the Internet: URL:http://www.3gpp.org/ftp/tsg_ran/WG1_RL 1/TSGR1_74/Docs/ [retrieved on 2013-08-10]

## Description

### TECHNICAL FIELD

The present invention relates to communications technologies, and in particular, to a neighboring cell measurement method and a device.

### BACKGROUND

In a wireless communications system, a network is divided into many cells (Cell). Generally, there is one base station in one cell. User equipment (User Equipment, UE for short) establishes a connection to one (or more) base station. As the UE moves, it may leave one cell and enter another cell. Therefore, the UE disconnects from the original base station, establishes a connection to a base station of a newly arrived cell, and turns to the base station of the newly arrived cell for services. This process is referred to as handover (handover). Before handover, the UE first needs to determine whether there are other cells nearby besides a currently connected cell and how signal quality of these cells is. If there is another cell nearby whose signal quality is better than that of the currently connected cell or if another handover condition is met, a network starts a handover procedure to hand over the UE to a more appropriate cell. In this case, the UE needs to perform "cell discovery and measurement" with respect to the cells nearby. The measurement herein means measuring signal strength of the cells nearby. In LTE, metrics (metric) for neighboring cell measurement generally include reference signal received power (Reference Signal Received Power, RSRP for short) and reference signal received quality (Reference Signal Received Quality, RSRQ for short). These two metrics can both reflect signal quality of a target cell. In a Long Term Evolution (Long Term Evolution, LTE for short) network, such measurement is also referred to as radio resource management (Radio Resource Management, RRM for short) measurement. In a present communications system, UE performs measurement mainly according to a cell-specific reference signal (cell specific reference signal, CRS for short) sent by a base station nearby.

For example, XP 50662670 refers to a CSI-RS based RRM measurement for synchronized new carriers. Further, WO 2013/007207A1 refers to a cell measurement method.

With the progress of communications technologies and network technologies, some base stations may not continuously send a CRS but send a CRS periodically at intervals. In addition, a base station may use a reference signal except a CRS, such as a channel state information-reference signal (channel state information-reference signal, CSI-RS) or a discovery reference signal (Discovery reference signal, DRS for short), for UE to perform RRM measurement. For example, a base station that supports the new carrier type (New Carrier Type, NCT for short) technology, the small cell technology, or the like cannot perform neighboring cell RRM measurement according to the prior-art method.

### SUMMARY

Embodiments of the present invention provide a neighboring cell measurement method and a device, which implement neighboring cell discovery and measurement on a network on which a reference signal for RRM measurement is not continuously sent.

According to a first aspect, a user equipment, UE, is provided, the UE comprising: a receiving module, configured to receive configuration information, sent by a base station, of at least two radio resource management, RRM, measurement procedures that are independent of each other;
a measurement module, configured to perform RRM measurement on one carrier by using the at least two RRM measurement procedures that are independent of each other, and obtain at least two RRM measurement results; and
a sending module, configured to report the RRM measurement results to the base station,
wherein
the configuration information of each RRM measurement procedure comprises a group of measurement time-domain information and corresponding measurement parameter information; and
the receiving module is specifically configured to receive at least two groups of measurement time-domain information and measurement parameter information corresponding to each group of measurement time-domain information that are sent by the base station,
wherein the at least two groups of measurement time-domain information comprise:
at least two measurement gaps that are configured for each carrier by the base station, wherein each measurement gap is a group of measurement time-domain information.

According to a second aspect, a user equipment, UE, is provided, the UE comprising: a receiving module, configured to receive configuration information, sent by a base station, of at least two radio resource management, RRM, measurement procedures that are independent of each other;
a measurement module, configured to perform RRM measurement on one carrier by using the at least two RRM measurement procedures that are independent of each other, and obtain at least two RRM measurement results; and
a sending module, configured to report the RRM measurement results to the base station,
wherein
the configuration information of each RRM measurement procedure comprises a group of measurement time-domain information and corresponding measurement parameter information; and
the receiving module is specifically configured to receive at least two groups of measurement time-domain information and measurement parameter information corresponding to each group of measurement time-domain information that are sent by the base station,
wherein the at least two groups of measurement time-domain information comprise:
at least two sub-gaps divided from a measurement gap by the base station, wherein each sub-gap is a group of measurement time-domain information.

According to a third aspect a base station is provided, the base station comprising: a configuration module, configured to configure for one carrier at least two radio resource management ,RRM, measurement procedures that are independent of each other, wherein configuration information of each RRM measurement procedure comprises a group of measurement time-domain information and corresponding measurement parameter information;
a sending module, configured to send, to user equipment, UE, the configuration information of the at least two RRM measurement procedures that are independent of each other; and
a receiving module, configured to receive an RRM measurement result reported by the UE,
wherein the configuration module is specifically configured to: configure at least two groups of measurement time-domain information for each carrier according to a discovery reference signal sent by a neighboring base station, and configure corresponding measurement parameter information for each group of measurement time-domain information,
wherein the configuration module is specifically configured to:
configure at least two measurement gaps for each carrier, and use each measurement gap as a group of measurement time-domain information.

According to a fourth aspect a base station is provided, the base station comprising: a configuration module, configured to configure for one carrier at least two radio resource management ,RRM, measurement procedures that are independent of each other, wherein configuration information of each RRM measurement procedure comprises a group of measurement time-domain information and corresponding measurement parameter information;
a sending module, configured to send, to user equipment, UE, the configuration information of the at least two RRM measurement procedures that are independent of each other; and
a receiving module, configured to receive an RRM measurement result reported by the UE,
wherein the configuration module is specifically configured to: configure at least two groups of measurement time-domain information for each carrier according to a discovery reference signal sent by a neighboring base station, and configure corresponding measurement parameter information for each group of measurement time-domain information,
wherein the configuration module is specifically configured to:
divide at least two sub-gaps from a measurement gap, and use each sub-gap as a group of measurement time-domain information.

According to the neighboring cell measurement method and the device provided in the embodiments of the present invention, a base station configures for a carrier at least two radio resource management RRM measurement procedures that are independent of each other, where configuration information of each RRM measurement procedure includes a group of measurement time-domain
information and corresponding measurement parameter information; sends, to UE, the configuration information of the at least two RRM measurement procedures that are independent of each other, so that the UE uses the at least two radio resource management RRM measurement procedures that are independent of each other to perform RRM measurement on each carrier; and then receives an RRM measurement result reported by the UE. The at least two RRM measurement procedures that are independent of each other may be configured with respect to different neighboring cells, and therefore, measurement time-domain information corresponding to at least one RRM measurement procedure in the at least two RRM measurement procedures matches time-domain information of a reference signal for RRM measurement that is sent by a to-be-measured neighboring cell, and further, a neighboring cell in which a reference signal for RRM measurement is not continuously sent can be measured, so as to obtain an accurate result of neighboring cell discovery and neighboring cell measurement.

### BRIEF DESCRIPTION OF DRAWINGS

FIG. 1 is a schematic structural diagram of Embodiment 1 of UE according to the present invention;
FIG. 2a is a schematic diagram of three small cells sending discovery reference signals and measurement time-domain information of UE.
FIG. 2b is a schematic diagram of three small cells sending discovery reference signals and measurement time-domain information of UE;
FIG. 3 is a schematic structural diagram of Embodiment 1 of a base station according to the present invention;
FIG. 4 is a schematic structural diagram of Embodiment 2 of UE according to the present invention;
FIG. 5 is a schematic structural diagram of Embodiment 2 of a base station according to the present invention;
FIG. 6 is a flowchart of Embodiment 1 of a neighboring cell measurement method according to the present invention;
FIG. 7 is a flowchart of Embodiment 2 of a neighboring cell measurement method according to the present invention; and
FIG. 8 is an interaction flowchart of Embodiment 3 of a neighboring cell measurement method according to the present invention.

### DESCRIPTION OF EMBODIMENTS

The embodiments and/or examples of the following description which are not covered by the appended claims are considered as not being part of the present invention. To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

UE completes neighboring cell discovery and neighboring cell measurement mainly by detecting a CRS that is sent by a base station. The embodiments of the present invention provide a method for neighboring cell measurement and neighboring cell discovery with respect to a scenario of a new communications technology in which a base station no longer continuously sends a reference signal for RRM measurement, such as a CRS, a CSI-RS, or a DRS. The new carrier type NCT is an example scenario in which a base station no longer continuously sends a reference signal for RRM measurement. In the new carrier type, to reduce network interference and energy consumption brought by a CRS, the CRS is sent only periodically at intervals instead of being sent continuously. For example, in every 10 consecutive subframes, a CRS is sent only in the first subframe and the sixth subframe. Another example is the small cell on/off technology (small cell on/off), where small cell on/off is meant for a small cell network. A conventional LTE wireless network includes a macro cell base station. The macro cell base station is a common tower-shaped base station. These base stations are installed relatively high and have high transmit power, and therefore can usually cover a relatively large area and serve a large quantity of users. However, with the development of cities, continuous deployment of macro cell base stations encounters a lot of challenges, for example, difficulty in site selection and hardship to increase density. Therefore, small cells or micro cells are introduced in the industry. The small cell is characterized by low transmit power and ease of installation and is generally not installed very high. Therefore, the small cell usually covers a very small range and serves a relatively small quantity of users. Such small cells or micro cells are particularly suitable for a densely-populated residential or commercial region. For example, in a shopping center, multiple small cells may be deployed to service UE. To reduce electricity consumption and interference, a small cell may be turned off if no user needs to be serviced, and the small cell is turned on again when a user comes to neighborhood of the small cell. This is the small cell on/off technology. Off-state small cells do not stop all transmission. Instead, the small cell sends a downlink reference signal (which is also referred to as a discovery reference signal, discovery reference signal, DRS for short) at specific intervals, so that UE can discover these off-state small cells. The UE also needs to measure received signal quality of reference signals of these small cells, and report measurement results to a network side. In this way, once these small cells are on, the network side can quickly hand over the UE to these small cells. However, because a DRS is sent only periodically, RRM measurement cannot be performed according to the prior-art method by using the DRS. The embodiments of the present invention can provide a corresponding measurement method and device.

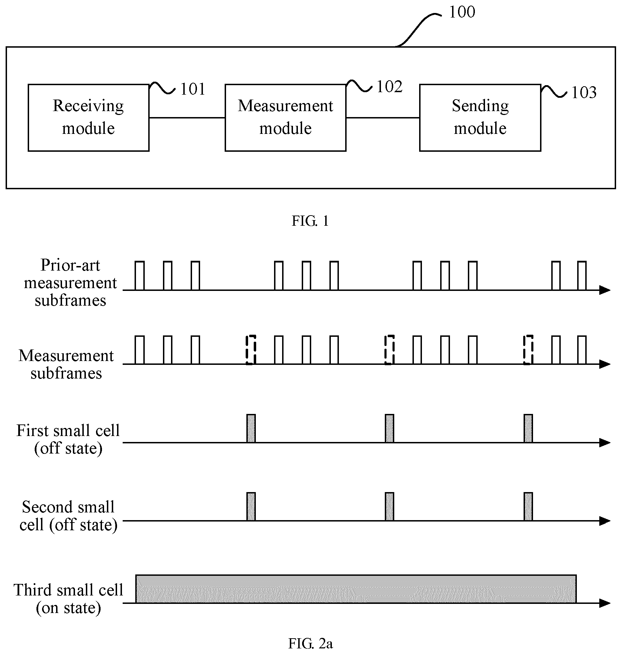

FIG. 1 is a structural schematic diagram of Embodiment 1 of UE according to the present invention. As shown in FIG. 1, the UE 100 in this embodiment may include:
a receiving module 101, configured to receive configuration information, sent by a base station, of at least two radio resource management RRM measurement procedures that are independent of each other, where the RRM measurement procedures are configured by the base station according to information about a to-be-measured neighboring cell;
a measurement module 102, configured to perform RRM measurement on one carrier by using the at least two RRM measurement procedures that are independent of each other, and obtain at least two RRM measurement results; and
a sending module 103, configured to report the RRM measurement results to the base station.

Further and specifically, the configuration information of each RRM measurement procedure includes a group of measurement time-domain information and corresponding measurement parameter information; and
the receiving module 101 is specifically configured to receive at least two groups of measurement time-domain information and measurement parameter information corresponding to each group of measurement time-domain information that are sent by the base station.

In an existing RRM measurement process, a base station normally configures only one RRM measurement procedure for a carrier. That is, each carrier is corresponding to one group of measurement time-domain information and measurement parameter information corresponding to the group of measurement time-domain information. In the following, a small cell network is used as an example to describe how the UE in this embodiment performs neighboring cell measurement that cannot be performed in the prior-art RRM. It is assumed that there are three small cells on the network, which are a first small cell, a second small cell, and a third small cell. FIG. 2a is a schematic diagram of the three small cells sending reference signals and measurement time-domain information of UE. In FIG. 2a, lateral axes represent time axes, and gray blocks in the time axes of the three small cells represent subframes in which signal transmission is performed. As shown in FIG. 2a, the third small cell is in an on state and performs uplink signal transmission continuously, while the first small cell and the second small cell are in an off state and send only some DRSs periodically. (In the example shown in FIG. 2a, the first small cell and the second small cell send DRSs at a same interval and send DRSs in same subframes. On actual networks, however, different off-state small cells may send DRSs at different intervals). If cell measurement and discovery is performed by using the prior art, the base station configures for the UE a group of measurement subframes as measurement time-domain information, for example, prior-art measurement subframes in FIG. 2a (represented by solid lines), to make the UE perform RRM measurement in this group of measurement subframes. Therefore, the UE can measure a DRS of the third small cell but may not be able to measure a DRS of the second small cell or the first small cell. Specifically, a DRS sent by the second small cell can be measured only when this group of measurement subframes matches both an interval at which the first small cell sends a DRS and an interval at which the second small cell sends a DRS. If this group of measurement subframes does not match an interval at which the second small cell sends a DRS, the second small cell cannot be measured. If this group of measurement subframes does not match an interval at which the first small cell sends a DRS, the first small cell cannot be measured. The intervals at which the off-state first small cell and the off-state second small cell send DRSs may be different. Actually, a probability that this group of measurement subframes matches both the interval at which the first small cell sends a DRS and the interval at which the second small cell sends a DRS is quite low. Therefore, averaging and filtering on measurement results according to the prior-art RRM measurement causes a deviation of a measurement result.

However, for the UE in this embodiment, the receiving module 101 receives the at least two groups of measurement time-domain information (for example, in FIG. 2a, a group of subframes represented by solid lines and a group of subframes represented by dashed lines) and the measurement parameter information corresponding to each group of measurement time-domain information. Different measurement time-domain information may be configured with respect to different small cells, so that each group of measurement time-domain information matches an interval at which one small cell sends a DRS. As shown in FIG. 2a, a DRS of the third small cell can be measured in the subframes represented by solid lines, and DRSs of the first small cell and the second small cell can be measured in the subframes represented by dashed lines. In addition, the measurement module 102 performs RRM measurement on one carrier by using the at least two RRM measurement procedures that are independent of each other, and obtains at least two RRM measurement results. That is, independent RRM measurement may be performed with respect to different small cells. Therefore, a neighboring cell in which a DRS is not continuously sent can be measured, so as to obtain an accurate result of neighboring cell discovery and neighboring cell measurement.

Specifically, because wired connection is used between base stations, where such wired connection is referred to as backhaul. The base stations may communicate with each other by means of backhaul. In this way, a base station with DRS transmission enabled may notify, by means of backhaul, a serving base station of the UE of information about subframes in which a DRS is sent, and the serving base station may configure, according to the subframe information, corresponding measurement time-domain information. In the example shown in FIG. 2a, the serving base station may configure a second group of measurement time-domain information as a set of subframes in which the first small cell and the second small cell send DRSs, that is, dashed line blocks on a second time axis of FIG. 2a.

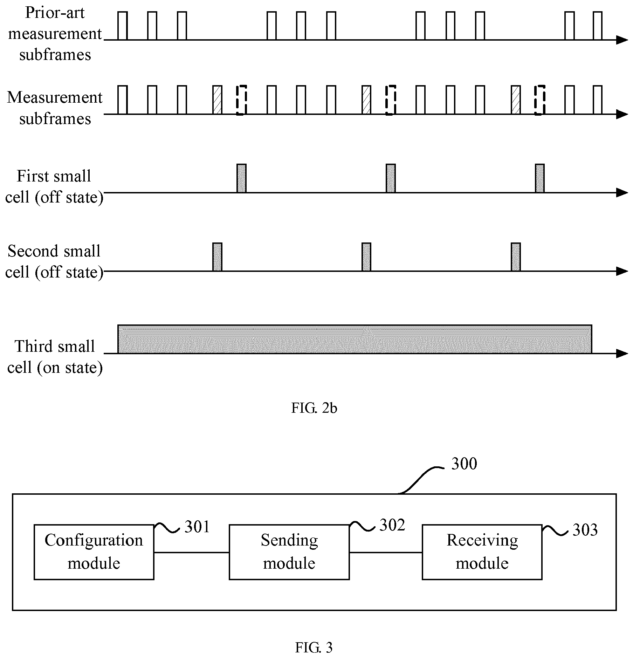

FIG. 2b is a schematic diagram of three small cells sending reference signals and measurement time-domain information of UE. In FIG. 2b, lateral axes represent time axes, and gray blocks in the time axes of the three small cells represent subframes in which signal transmission is performed. As shown in FIG. 2b, a third small cell is in an on state and performs uplink signal transmission continuously, while a first small cell and a second small cell are in an off state and send only some DRSs periodically. Different from FIG. 2a, in FIG. 2b, the off-state first small cell and the off-state second small cell send DRSs at different time points. An advantage of this is that mutual interference caused when the first small cell and the second small cell send DRSs simultaneously can be reduced. That is, interference is relatively low when an off-state cell sends a DRS to all cells at different time. For RRM measurement, the base station needs to configure at least three groups of RRM measurement procedures for the UE, to ensure accuracy of neighboring cell measurement for the foregoing three cells. As shown on the second time axis of FIG. 2b, solid line blocks, dashed line blocks, and shadowed blocks respectively represent three sets of measurement subframes corresponding to the three RRM measurement procedures.

Further, the at least two groups of measurement time-domain information may be in any of the following four manners:
Manner 1. The base station configures at least two sets of measurement subframes for each carrier, where each set of measurement subframes is a group of measurement time-domain information.
   Specifically, the base station configures one set of measurement subframes measSubframePatternConfig for each carrier. In this embodiment, the base station may configure multiple sets of measurement subframes for each carrier, for example, configuring for each carrier two sets of measurement subframes: measSubframePatternConfig 1 and measSubframePatternConfig 2. In addition, measSubframePatternConfig 1 is used as a first group of measurement time-domain information, that is, the solid line blocks on the second time axis of FIG. 2a; measSubframePatternConfig 2 is used as a second group of measurement time-domain information, that is, the dashed line blocks on the second time axis of FIG. 2a.
   When this manner is used, a manner for indicating the first group of time-domain information and the second group of time-domain information may be specifying, according to the respective fixed interval, which subframes are measurement subframes at respective fixed intervals. For example, measSubframePatternConfig1 may be 1010101010, which represents that 10 subframes are an interval, and subframes 1, 3, 5, 7, and 9 are measurement subframes, that is, the solid line blocks on the second time axis of FIG. 2a. measSubframePatternConfig2 may be 00000000000000000001, which represents that 20 subframes are an interval, and the last subframe of every 20 subframes is a measurement subframe, that is, the dashed line blocks on the second time axis of FIG. 2a.
Manner 2. The base station divides at least two subsets from the set of measurement subframes that is configured for each carrier, where each subset is a group of measurement time-domain information.
   Specifically, for example, the base station may configure a set of measurement subframes as 1010101010 for a given carrier, which represents that 10 subframes are an interval, subframes 1, 3, 5, 7, and 9 are subframes for measurement (that is, subframes represented by 1 in the string 1010101010), and the remaining subframes are not for measurement. In this embodiment, the base station may further deliver signaling to the UE, where the signaling is, for example, "measSubframeSubset" indicating that a subset including subframes 9 is used as the second group of measurement time-domain information, that is, the dashed line blocks on the second time axis of FIG. 2a; and that a subset including the remaining subframes 1, 3, 5, and 7 is used as the first group of measurement time-domain information, that is, the solid line blocks on the second time axis of FIG. 2a. Alternatively, a subframe configuration sent by the base station to the UE may be 1010101020, where 0 represents a subframe in which measurement is not performed, 1 represents a subframe belonging to the first measurement time-domain information, and 2 represents a subframe belonging to the second measurement time-domain information.
Manner 3. The base station configures for each carrier at least two measurement gaps, where each measurement gap is a group of measurement time-domain information. Specifically, the base station configures one measurement gap for each carrier, and therefore, the UE can perform measurement only in a designated subframe in the gap. In this embodiment, the base station may configure multiple measurement gaps for the UE, and specifically may perform configuration by using a measurement gap configuration (Measurement gap configuration) parameter. This parameter is set with respect to inter-frequency measurement. The UE needs to perform RRM measurement for multiple carriers, and the UE itself also works on a given carrier (that is, the UE is connected to a serving cell on the given carrier). If a carrier measured by the UE is the same as a current working carrier, the measurement is referred to as intra-frequency measurement. If a carrier measured by the UE is different from a current carrier, the measurement is referred to as inter-frequency measurement. When performing inter-frequency measurement, the UE normally needs to interrupt work on an original carrier, and then receives a signal from another carrier and performs measurement. A time of interruption herein is the gap. In LTE, a gap occurs periodically, for example, it may be stipulated that there is a gap at every 40 ms or 80 ms and that a time length for each gap is 6 ms. The measurement gap configuration parameter is used to set an interval and a specific location of a gap.
   For example, gap1 and gap2 are configured, where gap1 and gap2 represent two independent sets of subframes, and each gap is used as a group of measurement time-domain information. Intervals, offsets, and durations of gap1 and gap2 may be all different. Some may be the same though. For example, an interval of gap 1 may be 40 ms, while an interval of gap2 may be 80 ms (or even may be 480 ms). A duration of Gap1 may be 6 consecutive subframes, while a duration of gap2 may be 20 consecutive subframes. In this case, the base station needs to send, to the UE, an interval, an offset, and a duration corresponding to each gap to the UE.
Manner 4. The base station divides at least two sub-gaps (sub-gap) from subframes indicated by the measurement gap, where each sub-gap is a group of measurement time-domain information.

Specifically, a gap may be so set that 6 subframes are set as a gap at every 40 or 80 subframes. For example, an interval may be set to 40 subframes, and a first group of measurement subframes indicated by the gap are subframes 1 to 6, a second group of measurement subframes are subframes 41-46, and a third group of measurement subframes are subframes 81-86. In this embodiment, it may be set that the first group of every five groups of measurement subframes of the gap, that is, the subframes 1 to 6, are the second measurement time-domain information, and that the remaining of the measurement subframes are the first group of time-domain information.

Further, in this embodiment, configuration information of an RRM measurement procedure with respect to each carrier includes a group of measurement time-domain information and corresponding measurement parameter information. The measurement parameter information corresponding to each group of measurement time-domain information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter, or whether a CRS antenna port 1 is present.

The following details the configuration parameters.

Measurement bandwidth (allowed measurement bandwidth): The measurement bandwidth represents how much bandwidth is used for RRM measurement. For example, the measurement bandwidth may be set to 15 physical resource blocks (Physical Resource Block, PRB for short) for one RRM measurement procedure, and the measurement bandwidth may be set to 50 PRBs for another RRM measurement procedure.

Significance of setting the measurement bandwidth lies in: UE performs RRM measurement by using a downlink reference signal that is sent by a cell nearby, where a signal sent by the cell nearby normally occupies a relatively large bandwidth, for example, using 20 MHz bandwidth, but measurement performed by the UE normally does not need to use an uplink reference signal of the full bandwidth. Therefore, it may be specified how much bandwidth is specifically used by the UE to complete measurement.

List of cells that may be measured (NeighCellList): A corresponding list of cells that may be measured may be set with respect to each RRM measurement procedure. Significance of setting the list of cells that may be measured lies in: UE measures multiple carriers, where multiples cells work on each carrier, and therefore, when the UE performs measurement on a given carrier, multiple cells may be discovered and RRM measurement is performed with respect to each cell. Configuring the NeighCellList is to notify the UE of cells that are nearby, where all these cells are cells that may be discovered when the UE performs neighboring cell discovery and measurement.

In specific configuration, for example, the list of cells that may be measured may be set to 10, 18, or 90 with respect to one RRM measurement procedure, and the list of cells that may be measured may be set to 45, 56, or 78 with respect to another RRM measurement procedure.

Cell blacklist (blackcell): A corresponding cell blacklist may be set with respect to each RRM measurement procedure. Significance of setting the cell blacklist lies in: for the purpose of operation, some cells nearby do not allow some UEs to access. For example, some cells are private cells and do not allow uncertified users to access. Therefore, during measurement, it is unnecessary to report measurement results of these cells. The cell blacklist informs the UE of a list of cells that are unnecessary to be reported on this carrier. In specific configuration, for example, the list of cells that may be measured may be set to 23, 24, or 132 with respect to one RRM measurement procedure, and the list of cells that may be measured may be set to 35, 67, or 132 with respect to another RRM measurement procedure.

Threshold for event-triggered reporting: This parameter means that UE reports an RRM measurement result to a network side when a preset condition (the threshold for event-triggered reporting) is met. This parameter may include report triggering thresholds for multiple events. In addition, multiple thresholds may be set for one event, and setting may also be performed independently with respect to each RRM measurement procedure. A series of preset conditions are stipulated in the LTE protocol, which are EventA1, EventA2, ..., and EventA6. Description of these events is as follows: EventA1 means that signal quality of a cell (serving cell) to which UE is connected exceeds a given threshold. EventA2 means that signal quality of a cell (serving cell) to which UE is connected is below a given threshold. EventA3 means that signal quality of a neighboring cell exceeds that of a PCell of UE by a threshold, where the PCell of the UE herein indicates that the UE may work on multiple carriers simultaneously, one of the carriers is referred to as the PCell (Primary Cell) of the UE and the other carriers are referred to as SCells (Secondary Cell) of the UE. EventA4 means that signal quality of a neighboring cell exceeds a threshold. EventA5 means received quality of a PCell to which UE is connected is below threshold 1 and received quality of a neighboring cell exceeds threshold 2. EventA6 means that signal quality of a neighboring cell exceeds that of a SCell of UE by a threshold.

In specific configuration, for example, {EventA1 threshold, EventA2 threshold, EventA3 threshold, EventA4 threshold, EventA5 threshold, EventA6 threshold} is set with respect to one RRM measurement procedure, and {EventA1 threshold, EventA2 threshold, EventA3 threshold} is set with respect to another RRM measurement procedure.

Report interval (Report Interval): A corresponding report interval may be set with respect to each RRM measurement procedure. For example, the report interval is set to 320 ms with respect to one RRM measurement procedure, and the report interval is set to 640 ms with respect to another RRM measurement procedure.

Report metric: It may be so set that only RSRP or only RSRQ is reported or both are reported. In addition, a corresponding report metric may be set with respect to each RRM measurement procedure. For example, reporting RSRP may be set with respect to one RRM measurement procedure, and reporting RSRQ may be set with respect to another RRM measurement procedure.

Report event driving metric: The report event driving metric may be set to RSRP or RSRQ. This parameter is used to instruct UE whether a trigger condition is based on RSRP or RSRQ for event-triggered reporting. For example, the event A1 (EventA1) indicates, for triggering when signal quality of a serving cell exceeds a given threshold, whether it is that RSRP exceeds a threshold or RSRQ exceeds a threshold. That is, the foregoing events A1 to A6 may be driven by RSRP or be driven by RSRQ. A corresponding report event driving metric may be set with respect to each RRM measurement procedure.

A maximum quantity of cells to report (maximal cell to report): Setting may be performed separately with respect to each RRM measurement procedure. For example, the maximum quantity of cells to report may be set to 3 with respect to one RRM measurement procedure, and the maximum quantity of cells to report may be set to 5 with respect to another RRM measurement procedure.

Layer 3 filter parameter (FilterCoefficient): Setting may be performed with respect to each RRM measurement procedure. For example, the layer 3 filter parameter may be set to 0.7 with respect to one RRM measurement procedure, and the layer 3 filter parameter may be set to 0.9 with respect to another RRM measurement procedure. Significance of this parameter is related to specific measurement behavior of UE. For the measurement of UE, multiple layer 1 (layer 1) measurement results may be obtained first, then the UE performs averaging (or filtering) on the layer 1 measurement results to obtain a filtered result, and then layer 1 (L1) of the UE reports, at a specific rate, the filtered result to an upper layer of the UE. For example, reporting is performed at every 200 ms or every 480 ms. The upper layer of the UE performs upper-layer filtering on the result reported by L1. In LTE, such filtering is also referred to as layer 3 filtering (Layer3 filtering). A filter coefficient for layer 3 filtering needs to be set, and the FilterCoefficient herein is set according to a configured value.

Whether a CRS antenna port 1 is present (a name of this parameter is, for example, presenseAntennaPort1): This parameter may be set to "True" or "False". For example, this parameter may be set to "True" with respect to one RRM measurement procedure, and this parameter is set to "False" with respect to another RRM measurement procedure.

Significance of setting this parameter lies in: UE performs RRM measurement based on a downlink reference signal. In a present LTE system, the UE performs measurement mainly according to a CRS delivered by a base station nearby. The CRS in LTE may be sent by using antenna ports 0 to 3. Each base station sends a CRS and sends the CRS at the antenna port 0 (antenna port 0) at least, but it is indefinite whether the CRS is sent at the antenna port 1, 2, or 3. Therefore, when performing RRM measurement, the UE uses a CRS that is sent at the antenna port 0 at least. Setting "presenseAntennaPort1" herein is to indicate to the UE whether the antenna port 1 may be used besides the antenna port 0 to perform RRM measurement.

The measurement parameter information may further include OffsetFreq, where this parameter indicates a compensation value for RSRP or RSRQ that is obtained by means of measurement with respect to this carrier. For example, this parameter may be set to 0 dB with respect to one RRM measurement procedure, and this parameter is set to 5 dB with respect to another RRM measurement procedure.

After receiving the configuration information of the foregoing RRM measurement procedures, the UE performs, according to corresponding measurement parameter information, RRM measurement and reporting in subframes that are determined by the measurement time-domain information of each RRM measurement procedure.

UE in this embodiment receives configuration information, sent by a base station, of at least two RRM measurement procedures that are independent of each other; performs RRM measurement on one carrier by using the at least two RRM measurement procedures that are independent of each other, and obtains at least two RRM measurement results; and reports the RRM measurement results to the base station. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

Further, in the foregoing embodiment, the sending module 103 is specifically configured to:
separately report at least two the RRM measurement results to the base station; or
select one RRM measurement result from at least two the RRM measurement results and report the RRM measurement result to the base station; or
report a combination of at least two the RRM measurement results to the base station.

Further and specifically, the sending module 103 is specifically configured to:
report a weighted average of at least two the RRM measurement results to the base station.

Specifically, the example shown in FIG. 2a is used for description. It is assumed that subframes represented by solid lines are corresponding to a first RRM measurement procedure 1, and that subframes represented by dashed lines are corresponding to a second RRM measurement procedure. The third small cell is steadily on, and therefore, when executing the first RRM measurement procedure, the UE discovers existence of the third small cell and performs RRM measurement on the third small cell. In addition, when executing the second RRM measurement procedure, the UE also discovers existence of the third small cell and performs RRM measurement on the third small cell. Interference levels are different in different measurement subframes. For example, in FIG. 2a, in the subframes corresponding to the first RRM measurement procedure, no signal transmission is performed in the first small cell or the second small cell, and therefore, DRS transmission in the third small cell receives no interference from the two cells. However, in the subframes corresponding to the second RRM measurement procedure, transmission in the third small cell receives interference from the first small cell and the second small cell. Therefore, the measurement results obtained by using the two RRM measurement procedures are different.

In this case, with respect to a measurement result of the third small cell, the UE may have three processing methods:
Method 1. The UE reports both measurement results of the third small cell obtained by using the two procedures. An advantage of using manner 1 lies in: a network side may obtain two measurement results, and received quality of a currently on cell is affected once a cell changes from an off state to an on state. The advantage of this solution lies in: reporting two results can help the network side determine how the on-state cell is affected after the currently off cell is on, and can further help the network side determine whether to turn on the off-state cell. For example, a measurement result for the first RRM measurement procedure reflects received signal quality of the third small cell in a case in which both the first small cell and the second small cell are in an off state. A result for the second RRM measurement reflects received signal quality of the third small cell if the first and second small cells are on. The network side may determine, by using the two groups of results, whether it is good to turn on the first and the second small cells.
Method 2. The UE may report, according to an instruction of the base station, only a measurement result obtained by using the first RRM measurement procedure. An advantage of using manner 2 lies in: an amount of reported information is relatively small, and air interface resources can be saved.
Method 3. The UE may report a combination of results obtained by using the two procedures. For example, the UE may report a weighted average of the two RRM measurement results to the base station. For example, M = 0.9M1 + 0.1M2 is used, where M is a result finally reported, M1 is a measurement result obtained by using the first RRM measurement procedure, and M2 is a measurement result obtained by using the second RRM measurement procedure.

The base station may configure in advance a manner for the UE to report the RRM measurement result of the third small cell, or may instruct the UE in real time which manner is to be used for reporting.

In another embodiment, the measurement parameter information includes a list of cells that may be measured; and
the sending module 103 is specifically configured to:
report, by the UE to the base station, only an RRM measurement result, in the RRM measurement results obtained by means of measurement, of a cell belonging to the list of cells that may be measured.

In specific implementation, configuration information of the RRM measurement procedures delivered to the UE by the base station includes the list of cells that may be measured (NeighCellList). In this embodiment, optionally, after configuring multiple RRM measurement procedures in advance, the base station may set one or more of the procedures so that a cell outside the NeighCellList is not measured even if the cell is discovered, or even if a cell outside the NeighCellList is measured, a measurement result of the cell is not reported. The example in FIG. 2a is used as an example. The first small cell, the second small cell, and the third small cell can be discovered by using the second RRM measurement procedure (the subframes represented by dashed lines). According to the method in this embodiment, the list of cells that may be measured may be set to be the first small cell and the second small cell, that is, only the first small cell and the second small cell are defined as target cells. Therefore, in measurement corresponding to the second RRM measurement procedure, measurement is not performed even if the UE has discovered the third small cell. Alternatively, it may be defined that a measurement result of the third small cell is not reported.

FIG. 3 is a schematic structural diagram of Embodiment 1 of a base station according to the present invention. As shown in FIG. 3, the base station 300 in this embodiment may include: a configuration module 301, a sending module 302, and a receiving module 303.

The configuration module 301 is configured to configure for one carrier at least two radio resource management RRM measurement procedures that are independent of each other, where configuration information of each RRM measurement procedure includes a group of measurement time-domain information and corresponding measurement parameter information.

The sending module 302 is configured to send, to UE, the configuration information of the at least two RRM measurement procedures that are independent of each other, so that the UE uses the at least two radio resource management RRM measurement procedures that are independent of each other to perform RRM measurement on each carrier.

The receiving module 303 is configured to receive an RRM measurement result reported by the UE.

Further and specifically, the configuration module 301 is specifically configured to: configure at least two groups of measurement time-domain information for each carrier according to time-domain information of a discovery reference signal sent by a neighboring base station, and configure corresponding measurement parameter information for each group of measurement time-domain information.

However, in an existing RRM measurement process, a base station normally configures only one RRM measurement procedure for a carrier. That is, each carrier is corresponding to one group of measurement time-domain information and measurement parameter information corresponding to the group of measurement time-domain information. In the following, a small cell network is used as an example to describe how the UE in this embodiment performs neighboring cell measurement that cannot be performed by using the prior-art RRM. The example shown in FIG. 2a is also used. It is assumed that there are three small cells on a network, which are a first small cell, a second small cell, and a third small cell. As shown in FIG. 2a, the third small cell is in an on state and performs uplink signal transmission continuously, while the first small cell and the second small cell are in an off state and send only some DRSs periodically. If cell measurement and discovery is performed by using the prior art, the base station configures for the UE a group of measurement subframes as measurement time-domain information, for example, subframes represented by solid lines shown in FIG. 2a, to make the UE perform RRM measurement in this group of measurement subframes. Therefore, the UE can measure a DRS of the third small cell but may not be able to measure a DRS of the second small cell or the first small cell. Therefore, performing averaging and filtering on measurement results according to the prior-art RRM measurement causes a deviation of a measurement result.

However, in this embodiment, the base station configures at least two groups of measurement time-domain information (for example, in FIG. 2a, one group of subframes represented by solid lines and one group of subframes represented by dashed lines) and measurement parameter information corresponding to each group of measurement time-domain information. Different measurement time-domain information may be configured with respect to different small cells, so that each group of measurement time-domain information matches an interval at which one small cell sends a DRS. As shown in FIG. 2a, a DRS of the third small cell can be measured in the subframes represented by solid lines, and DRSs of the first small cell and the second small cell can be measured in the subframes represented by dashed lines. In addition, the UE is instructed to perform RRM measurement on one carrier by separately using the at least two RRM measurement procedures that are independent of each other, and obtains at least two RRM measurement results. That is, independent RRM measurement may be performed with respect to different small cells. Therefore, a neighboring cell in which a DRS is not continuously sent can be measured, so as to obtain an accurate result of neighboring cell discovery and neighboring cell measurement.

Specifically, base stations may communicate with each other by means of backhaul. A base station with DRS transmission enabled may notify, by means of backhaul, a serving base station of the UE of information about subframes in which a DRS is sent, and the serving base station may configure, according to the subframe information, corresponding measurement time-domain information. In the example shown in FIG. 2a, the serving base station may configure a second group of measurement time-domain information as a set of subframes in which the first small cell and the second small cell send DRSs, that is, dashed line blocks on a second time axis of FIG. 2a. That is, the measurement time-domain information configured for the UE by the serving cell can match the subframes in which the first small cell and the second small cell send DRSs, which ensures that the UE can measure neighboring cell information of the first small cell and the second small cell and obtain an accurate measurement result.

In specific implementation, the configuration module 301 is specifically configured to:
configure at least two sets of measurement subframes for each carrier, and use each set of measurement subframes as a group of measurement time-domain information; or
divide at least two subsets from the set of measurement subframes, and use each subset as a group of measurement time-domain information; or
configure at least two measurement gaps for each carrier, and use each measurement gap as a group of measurement time-domain information; or
divide at least two sub-gaps from the measurement gap, and use each sub-gap as a group of measurement time-domain information.

For a specific implementation process, reference may be made to the description of the at least two groups of measurement time-domain information in Embodiment 1 of UE.

Further, the configuration information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

For detailed description of the configuration parameters, reference may be made to the description of the configuration parameters in Embodiment 1 of UE.

Further, the receiving module 303 is specifically configured to:
receive at least two the RRM measurement results that are separately reported by the UE; or
receive some RRM measurement results selected by the UE from at least two the RRM measurement results; or
receive an RRM measurement result obtained by combining, by the UE, at least two the RRM measurement results.

In an implementation manner, the receiving module 303 is specifically configured to:
receive an RRM measurement result obtained by performing, by the UE, weighted averaging on at least two the RRM measurement results.

Specifically, the example shown in FIG. 2a is used for description. It is assumed that subframes represented by solid lines are corresponding to a first RRM measurement procedure 1, and that subframes represented by dashed lines are corresponding to a second RRM measurement procedure. The third small cell is steadily on, and therefore, when executing the first RRM measurement procedure, the UE discovers existence of the third small cell and performs RRM measurement on the third small cell. In addition, when executing the second RRM measurement procedure, the UE also discovers existence of the third small cell and performs RRM measurement on the third small cell. Interference levels are different in different measurement subframes. For example, in FIG. 2a, in the subframes corresponding to the first RRM measurement procedure, no signal transmission is performed in the first small cell or the second small cell, and therefore, DRS transmission in the third small cell receives no interference from the two cells. However, in the subframes corresponding to the second RRM measurement procedure, transmission in the third small cell receives interference from the first small cell and the second small cell. Therefore, the measurement results obtained by using the two RRM measurement procedures are different.

In this case, with respect to a measurement result of the third small cell, the base station may instruct the UE to perform result reporting by using any one of the following three processing methods:
Manner 1. Instruct the UE to report both measurement results of the third small cell obtained by using the two procedures.
Manner 2. Instruct the UE to report, according to an instruction of the base station, only a measurement result obtained by using the first RRM measurement procedure.
Manner 3. Instruct the UE to report, according to an instruction of the base station, a combination of results obtained by using the two procedures. For example, the UE may report a weighted average of the two RRM measurement results to the base station. For example, M = 0.9M1 + 0.1M2 is used, where M is a result finally reported, M1 is a measurement result obtained by using the first RRM measurement procedure, and M2 is a measurement result obtained by using the second RRM measurement procedure.

The base station may configure in advance a manner for the UE to report the RRM measurement result of the third small cell, or may instruct the UE in real time which manner is to be used for reporting.

Correspondingly, the receiving module 303 may receive RRM measurement results reported in three manners.

Optionally, in a possible implementation manner, the measurement parameter information includes a list of cells that may be measured; and
the receiving module 303 is specifically configured to:
receive an RRM measurement result, in the RRM measurement results obtained by means of measurement, of a cell belonging to the list of cells that may be measured, where the UE reports only the RRM measurement result.

In specific implementation, configuration information of the RRM measurement procedures delivered to the UE by the base station includes the list of cells that may be measured (NeighCellList). In this embodiment, optionally, after configuring multiple RRM measurement procedures in advance, the base station may set one or more of the procedures so that a cell outside the NeighCellList is not measured even if the cell is discovered, or even if a cell outside the NeighCellList is measured, a measurement result of the cell is not reported. The example in FIG. 2a is still used as an example. The first small cell, the second small cell, and the third small cell can be discovered by using the second RRM measurement procedure (the subframes represented by dashed lines). According to the method in this embodiment, the list of cells that may be measured may be set to be the first small cell and the second small cell, that is, only the first small cell and the second small cell are defined as target cells. Therefore, in measurement corresponding to the second RRM measurement procedure, measurement is not performed even if the UE has discovered the third small cell. Alternatively, it may be defined that a measurement result of the third small cell is not reported.

A base station in this embodiment configures for a carrier at least two radio resource management RRM measurement procedures that are independent of each other, where configuration information of each RRM measurement procedure includes a group of measurement time-domain information and corresponding measurement parameter information; sends, to UE, the configuration information of the at least two RRM measurement procedures that are independent of each other, so that the UE uses the at least two radio resource management RRM measurement procedures that are independent of each other to perform RRM measurement on each carrier; and then receives an RRM measurement result reported by the UE. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

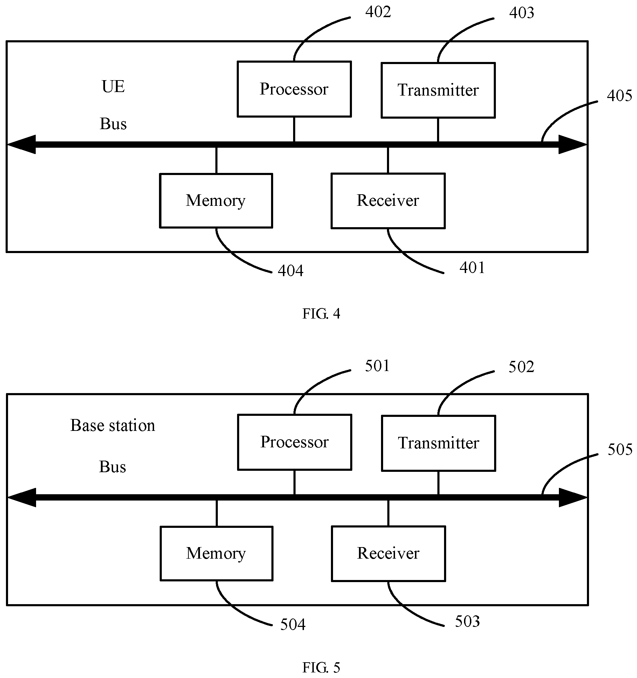

FIG. 4 is a schematic structural diagram of Embodiment 2 of UE according to the present invention. As shown in FIG. 4, the UE in this embodiment may include: a receiver 401, a processor 402, and a transmitter 403. A memory 404 and a bus 405 are also shown in the figure. The receiver 401, the processor 402, the transmitter 403, and the memory 404 are connected and implement communication with each other by using the bus 405.

The bus 405 may be an Industry Standard Architecture (Industry Standard Architecture, ISA) bus, a Peripheral Component Interconnect (Peripheral Component, PCI) bus or an Extended Industry Standard Architecture (Extended Industry Standard Architecture, EISA) bus, or the like. The bus 405 may be classified into an address bus, a data bus, a control bus, and the like. For ease of representation, only one thick line is used in FIG. 4, which does not mean that there is only one bus or only one type of bus.

The memory 404 is configured to store executable program code, where the program code includes a computer operation instruction. The memory 404 may include a high-speed RAM memory, and may further include a non-volatile memory (non-volatile memory), for example, at least one magnetic disk memory.

The processor 402 may be a central processing unit (Central Processing Unit, CPU) or an application-specific integrated circuit (Application Specific Integrated Circuit, ASIC), or is configured as one or more integrated circuits that implement the embodiments of the present invention.

The receiver 401 is configured to receive configuration information, sent by a base station, of at least two radio resource management RRM measurement procedures that are independent of each other, where the RRM measurement procedures are configured by the base station according to information about a to-be-measured neighboring cell.

The processor 402 is configured to perform RRM measurement on one carrier by using the at least two RRM measurement procedures that are independent of each other, and obtain at least two RRM measurement results.

The transmitter 403 is configured to report the RRM measurement results to the base station.

Further, the configuration information of each RRM measurement procedure includes a group of measurement time-domain information and corresponding measurement parameter information; and
the receiver 401 is specifically configured to receive at least two groups of measurement time-domain information and measurement parameter information corresponding to each group of measurement time-domain information that are sent by the base station.

Further, the at least two groups of measurement time-domain information include:
at least two sets of measurement subframes that are configured for each carrier by the base station, where each set of measurement subframes is a group of measurement time-domain information; or
at least two subsets divided from the set of measurement subframes that is configured for each carrier by the base station, where each subset is a group of measurement time-domain information; or
at least two measurement gaps that are configured for each carrier by the base station, where each measurement gap is a group of measurement time-domain information; or
at least two sub-gaps divided from the measurement gap by the base station, where each sub-gap is a group of measurement time-domain information.

Further, the transmitter 403 is specifically configured to:
separately report at least two the RRM measurement results to the base station; or
select one RRM measurement result from at least two the RRM measurement results and report the RRM measurement result to the base station; or
report a combination of at least two the RRM measurement results to the base station.

Further, the transmitter 403 is specifically configured to:
report a weighted average of at least two the RRM measurement results to the base station.

Further, the measurement parameter information includes a list of cells that may be measured; and
the transmitter 403 is specifically configured to:
report, by the UE to the base station, only an RRM measurement result, in the RRM measurement results obtained by means of measurement, of a cell belonging to the list of cells that may be measured.

Further, the measurement parameter information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

UE in this embodiment receives configuration information, sent by a base station, of at least two RRM measurement procedures that are independent of each other; performs RRM measurement on one carrier by using the at least two RRM measurement procedures that are independent of each other, and obtains at least two RRM measurement results; and reports the RRM measurement results to the base station. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

FIG. 5 is a schematic structural diagram of Embodiment 2 of a base station according to the present invention. As shown in FIG. 5, the base station in this embodiment may include: a processor 501, a transmitter 502, and a receiver 503. A memory 504 and a bus 505 are also shown in the figure. The processor 501, the transmitter 502, and the receiver 503, and the memory 504 are connected and implement communication with each other by using the bus 505.

The bus 505 may be an Industry Standard Architecture (Industry Standard Architecture, ISA) bus, a Peripheral Component Interconnect (Peripheral Component, PCI) bus or an Extended Industry Standard Architecture (Extended Industry Standard Architecture, EISA) bus, or the like. The bus 505 may be classified into an address bus, a data bus, a control bus, and the like. For ease of representation, only one thick line is used in FIG. 5, which does not mean that there is only one bus or only one type of bus.

The memory 504 is configured to store executable program code, where the program code includes a computer operation instruction. The memory 504 may include a high-speed RAM memory, and may further include a non-volatile memory (non-volatile memory), for example, at least one magnetic disk memory.

The processor 501 may be a central processing unit (Central Processing Unit, CPU) or an application-specific integrated circuit (Application Specific Integrated Circuit, ASIC), or is configured as one or more integrated circuits that implement the embodiments of the present invention.

The processor 501 is configured to configure, according to information about a to-be-measured neighboring cell, for one carrier at least two radio resource management RRM measurement procedures that are independent of each other, where configuration information of each RRM measurement procedure includes a group of measurement time-domain information and corresponding measurement parameter information.

The transmitter 502 is configured to send, to user equipment UE, the configuration information of the at least two RRM measurement procedures that are independent of each other, so that the UE uses the at least two radio resource management RRM measurement procedures that are independent of each other to perform RRM measurement on each carrier.

The receiver 503 is configured to receive an RRM measurement result reported by the UE.

Further, the processor 501 is specifically configured to: configure at least two groups of measurement time-domain information for each carrier according to a discovery reference signal sent by a neighboring base station, and configure corresponding measurement parameter information for each group of measurement time-domain information.

Further, the processor 501 is specifically configured to:
configure at least two sets of measurement subframes for each carrier, and use each set of measurement subframes as a group of measurement time-domain information; or
divide at least two subsets from the set of measurement subframes, and use each subset as a group of measurement time-domain information; or
configure at least two measurement gaps for each carrier, and use each measurement gap as a group of measurement time-domain information; or
divide at least two sub-gaps from the measurement gap, and use each sub-gap as a group of measurement time-domain information.

Further, the receiver 503 is specifically configured to:
receive at least two the RRM measurement results that are separately reported by the UE; or
receive some RRM measurement results selected by the UE from at least two the RRM measurement results; or
receive an RRM measurement result obtained by combining, by the UE, at least two the RRM measurement results.

Further, the receiver 503 is specifically configured to:
receive an RRM measurement result obtained by performing, by the UE, weighted averaging on at least two the RRM measurement results.

Further, the measurement parameter information includes a list of cells that may be measured; and
the receiver 503 is specifically configured to:
receive an RRM measurement result, in the RRM measurement results obtained by means of measurement, of a cell belonging to the list of cells that may be measured, where the UE reports only the RRM measurement result.

Further, the configuration information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

A base station in this embodiment configures for a carrier at least two radio resource management RRM measurement procedures that are independent of each other, where configuration information of each RRM measurement procedure includes a group of measurement time-domain information and corresponding measurement parameter information; sends, to UE, the configuration information of the at least two RRM measurement procedures that are independent of each other, so that the UE uses the at least two radio resource management RRM measurement procedures that are independent of each other to perform RRM measurement on each carrier; and then receives an RRM measurement result reported by the UE. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

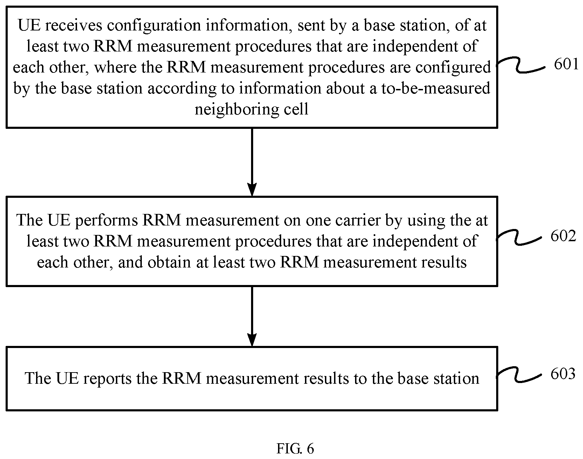

FIG. 6 is a flowchart of Embodiment 1 of a neighboring cell measurement method according to the present invention. The method of this embodiment is executed by UE, and may be executed by the UE in the embodiment shown in FIG. 1 or FIG. 4. As shown in FIG. 6, the method of this embodiment may include:
Step 601. The UE receives configuration information, sent by a base station, of at least two RRM measurement procedures that are independent of each other, where the RRM measurement procedures are configured by the base station according to information about a to-be-measured neighboring cell.

Specifically, the configuration information of each RRM measurement procedure may include a group of measurement time-domain information and corresponding measurement parameter information.

Step 601 is specifically: the UE receives at least two groups of measurement time-domain information and measurement parameter information corresponding to each group of measurement time-domain information that are sent by the base station.

Step 602. The UE performs RRM measurement on one carrier by using the at least two RRM measurement procedures that are independent of each other, and obtain at least two RRM measurement results.

Step 603. The UE reports the RRM measurement results to the base station.

In a prior-art RRM measurement process, a base station normally configures only one RRM measurement procedure for a carrier. That is, each carrier is corresponding to one group of measurement time-domain information and measurement parameter information corresponding to the group of measurement time-domain information. In the following, a small cell network is used as an example to describe how the UE in this embodiment performs neighboring cell measurement that cannot be performed in the prior-art RRM. The example shown in FIG. 2a is also used. It is assumed that there are three small cells on a network, which are a first small cell, a second small cell, and a third small cell. As shown in FIG. 2a, the third small cell is in an on state and performs uplink signal transmission continuously, while the first small cell and the second small cell are in an off state and send only some DRSs periodically. If cell measurement and discovery is performed by using the prior art, the base station configures for the UE a group of measurement subframes as measurement time-domain information, for example, subframes represented by solid lines shown in FIG. 2a, to make the UE perform RRM measurement in this group of measurement subframes. Therefore, the UE can measure a DRS of the third small cell but may not be able to measure a DRS of the second small cell or the first small cell. Therefore, performing averaging and filtering on measurement results according to the prior-art RRM measurement causes a deviation of a measurement result.

However, in this embodiment, a base station configures at least two groups of measurement time-domain information (for example, in FIG. 2a, one group of subframes represented by solid lines and one group of subframes represented by dashed lines) and measurement parameter information corresponding to each group of measurement time-domain information. Different measurement time-domain information may be configured with respect to different small cells, so that each group of measurement time-domain information matches an interval at which one small cell sends a DRS. As shown in FIG. 2a, a DRS of the third small cell can be measured in the subframes represented by solid lines, and DRSs of the first small cell and the second small cell can be measured in the subframes represented by dashed lines. In addition, the UE is instructed to perform RRM measurement on one carrier by separately using the at least two RRM measurement procedures that are independent of each other, and obtains at least two RRM measurement results. That is, independent RRM measurement may be performed with respect to different small cells. Therefore, a neighboring cell in which a DRS is not continuously sent can be measured, so as to obtain an accurate result of neighboring cell discovery and neighboring cell measurement.

Specifically, base stations may communicate with each other by means of backhaul. A base station with DRS transmission enabled may notify, by means of backhaul, a serving base station of the UE of information about subframes in which a DRS is sent, and the serving base station may configure, according to the subframe information, corresponding measurement time-domain information. In the example shown in FIG. 2a, the serving base station may configure a second group of measurement time-domain information as a set of subframes in which the first small cell and the second small cell send DRSs, that is, dashed line blocks on a second time axis of FIG. 2a. That is, the measurement time-domain information configured for the UE by the serving cell can match the subframes in which the first small cell and the second small cell send DRSs, which ensures that the UE can measure neighboring cell information of the first small cell and the second small cell and obtain an accurate measurement result in step 602.

In specific implementation, the at least two groups of measurement time-domain information may include:
at least two sets of measurement subframes that are configured for each carrier by the base station, where each set of measurement subframes is a group of measurement time-domain information; or
at least two subsets divided from the set of measurement subframes that is configured for each carrier by the base station, where each subset is a group of measurement time-domain information; or
at least two measurement gaps that are configured for each carrier by the base station, where each measurement gap is a group of measurement time-domain information; or
at least two sub-gaps divided from the measurement gap by the base station, where each sub-gap is a group of measurement time-domain information.

For a specific implementation process, reference may be made to the description of the at least two groups of measurement time-domain information in Embodiment 1 of UE, and details are not described herein.

Further, the measurement parameter information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

For detailed description of the configuration parameters, reference may be made to the description of the configuration parameters in Embodiment 1 of UE.

Further, in step 603 that the UE reports the RRM measurement results to the base station may include:
the UE reports at least two the RRM measurement results separately to the base station; or
the UE selects one RRM measurement result from at least two the RRM measurement results and reports the RRM measurement result to the base station; or
the UE reports a combination of at least two the RRM measurement results to the base station.

In an implementation manner, that the UE reports a combination of the at least two RRM results to the base station may include:
The UE reports a weighted average of at least two the RRM measurement results to the base station.

Specifically, the example shown in FIG. 2a is used for description. It is assumed that subframes represented by solid lines are corresponding to a first RRM measurement procedure 1, and that subframes represented by dashed lines are corresponding to a second RRM measurement procedure. The third small cell is steadily on, and therefore, when executing the first RRM measurement procedure, the UE discovers existence of the third small cell and performs RRM measurement on the third small cell. In addition, when executing the second RRM measurement procedure, the UE also discovers existence of the third small cell and performs RRM measurement on the third small cell. Interference levels are different in different measurement subframes. For example, in FIG. 2a, in the subframes corresponding to the first RRM measurement procedure, no signal transmission is performed in the first small cell or the second small cell, and therefore, DRS transmission in the third small cell receives no interference from the two cells. However, in the subframes corresponding to the second RRM measurement procedure, transmission in the third small cell receives interference from the first small cell and the second small cell. Therefore, the measurement results obtained by using the two RRM measurement procedures are different.

In this case, with respect to a measurement result of the third small cell, the base station may instruct the UE to perform result reporting by using any one of the following three processing methods:
Manner 1. Instruct the UE to report both measurement results of the third small cell obtained by using the two procedures.
Manner 2. Instruct the UE to report, according to an instruction of the base station, only a measurement result obtained by using the first RRM measurement procedure.
Manner 3. Instruct the UE to report, according to an instruction of the base station, a combination of results obtained by using the two procedures. For example, the UE may report a weighted average of the two RRM measurement results to the base station. For example, M = 0.9M1 + 0.1M2 is used, where M is a result finally reported, M1 is a measurement result obtained by using the first RRM measurement procedure, and M2 is a measurement result obtained by using the second RRM measurement procedure.

The base station may configure in advance a manner for the UE to report the RRM measurement result of the third small cell, or may instruct the UE in real time which manner is to be used for reporting.

Optionally, in another possible implementation manner, the measurement parameter information includes a list of cells that may be measured; and
step 603 may be: the UE reports only an RRM measurement result, in the RRM measurement results obtained by means of measurement, of a cell belonging to the list of cells that may be measured.

In specific implementation, configuration information of the RRM measurement procedures delivered to the UE by the base station includes the list of cells that may be measured (NeighCellList). Optionally, after configuring multiple RRM measurement procedures in advance, the base station may set one or more of the procedures so that a cell outside the NeighCellList is not measured even if the cell is discovered, or even if a cell outside the NeighCellList is measured, a measurement result of the cell is not reported. The example in FIG. 2a is still used as an example. The first small cell, the second small cell, and the third small cell can be discovered by using the second RRM measurement procedure (the subframes represented by dashed lines). According to the method in this embodiment, the list of cells that may be measured may be set to be the first small cell and the second small cell, that is, only the first small cell and the second small cell are defined as target cells. Therefore, in measurement corresponding to the second RRM measurement procedure, measurement is not performed even if the UE has discovered the third small cell. Alternatively, it may be defined that a measurement result of the third small cell is not reported.

In this embodiment, UE receives configuration information, sent by a base station, of at least two RRM measurement procedures that are independent of each other; performs RRM measurement on one carrier by using the at least two RRM measurement procedures that are independent of each other, and obtains at least two RRM measurement results; and reports the RRM measurement results to the base station. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

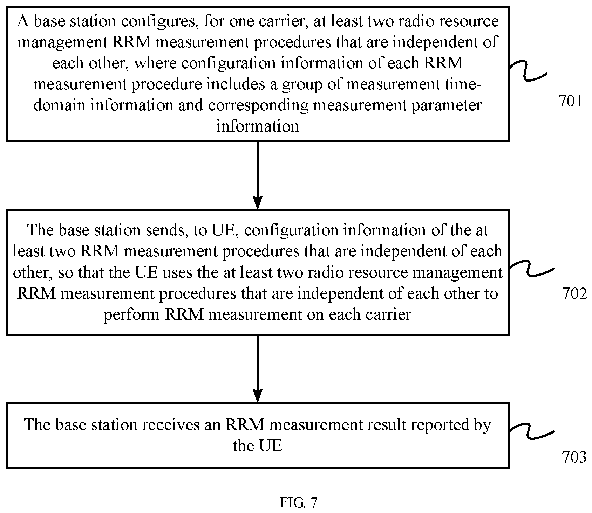

FIG. 7 is a flowchart of Embodiment 2 of a neighboring cell measurement method according to the present invention. The method of this embodiment is executed by a base station, and may be executed by the base station in the embodiment shown in FIG. 3 or FIG. 5. As shown in FIG. 7, the method of this embodiment may include:
Step 701. The base station configures, for one carrier, at least two radio resource management RRM measurement procedures that are independent of each other, where configuration information of each RRM measurement procedure includes a group of measurement time-domain information and corresponding measurement parameter information.

Further and specifically, that the base station configures for each carrier at least two radio resource management RRM measurement procedures that are independent of each other may include:
The base station configures at least two groups of measurement time-domain information for each carrier according to a discovery reference signal sent by a neighboring base station, and configures corresponding measurement parameter information for each group of measurement time-domain information.

Step 702. The base station sends, to UE, the configuration information of the at least two RRM measurement procedures that are independent of each other, so that the UE uses the at least two radio resource management RRM measurement procedures that are independent of each other to perform RRM measurement on each carrier.

Step 703. The base station receives an RRM measurement result reported by the UE.

Compared with the prior-art RRM measurement, in this embodiment, the base station configures, for each carrier, multiple RRM measurement procedures that are independent of each other, and sends the multiple RRM measurement procedures that are independent of each other to the UE, so that the UE performs RRM measurement on each carrier by using the at least two RRM measurement procedures that are independent of each other, and then performs measurement with respect to different base stations by using different RRM measurement procedures. Therefore, a neighboring cell in which a DRS is not continuously sent can be measured. The following details a principle of this method.

In a prior-art RRM measurement process, a base station normally configures only one RRM measurement procedure for a carrier. That is, each carrier is corresponding to one group of measurement time-domain information and measurement parameter information corresponding to the group of measurement time-domain information. In the following, a small cell network is used as an example to describe how the UE in this embodiment performs neighboring cell measurement that cannot be performed in the prior-art RRM. The example shown in FIG. 2a is also used. It is assumed that there are three small cells on a network, which are a first small cell, a second small cell, and a third small cell. As shown in FIG. 2a, the third small cell is in an on state and performs uplink signal transmission continuously, while the first small cell and the second small cell are in an off state and send only some DRSs periodically. If cell measurement and discovery is performed by using the prior art, the base station configures for the UE a group of measurement subframes as measurement time-domain information, for example, subframes represented by solid lines shown in FIG. 2a, to make the UE perform RRM measurement in this group of measurement subframes. Therefore, the UE can measure a DRS of the third small cell but may not be able to measure a DRS of the second small cell or the first small cell. Therefore, performing averaging and filtering on measurement results according to the prior-art RRM measurement causes a deviation of a measurement result.

However, in this embodiment, the base station configures at least two groups of measurement time-domain information (for example, in FIG. 2a, one group of subframes represented by solid lines and one group of subframes represented by dashed lines) and measurement parameter information corresponding to each group of measurement time-domain information. Different measurement time-domain information may be configured with respect to different small cells, so that each group of measurement time-domain information matches an interval at which one small cell sends a DRS. As shown in FIG. 2a, a DRS of the third small cell can be measured in the subframes represented by solid lines, and DRSs of the first small cell and the second small cell can be measured in the subframes represented by dashed lines. In addition, the UE is instructed to perform RRM measurement on one carrier by separately using the at least two RRM measurement procedures that are independent of each other, and obtains at least two RRM measurement results. That is, independent RRM measurement may be performed with respect to different small cells. Therefore, a neighboring cell in which a DRS is not continuously sent can be measured, so as to obtain an accurate result of neighboring cell discovery and neighboring cell measurement.

Specifically, base stations may communicate with each other by means of backhaul. A base station with DRS transmission enabled may notify, by means of backhaul, a serving base station of the UE of information about subframes in which a DRS is sent, and the serving base station may configure, according to the subframe information, corresponding measurement time-domain information. In the example shown in FIG. 2a, the serving base station may configure a second group of measurement time-domain information as a set of subframes in which the first small cell and the second small cell send DRSs, that is, dashed line blocks on a second time axis of FIG. 2a. That is, the measurement time-domain information configured for the UE by the serving cell can match the subframes in which the first small cell and the second small cell send DRSs, which ensures that the UE can measure neighboring cell information of the first small cell and the second small cell and obtain an accurate measurement result in step 602.

In specific implementation, that the base station configures at least two groups of measurement time-domain information for each carrier according to a discovery reference signal sent by a neighboring base station may include:
configuring, by the base station, at least two sets of measurement subframes for each carrier, and using each set of measurement subframes as a group of measurement time-domain information; or
dividing at least two subsets from the set of measurement subframes, and using each subset as a group of measurement time-domain information; or
configuring, by the base station, at least two measurement gaps for each carrier, and using each measurement gap as a group of measurement time-domain information; or
dividing at least two sub-gaps from the measurement gap, and using each sub-gap as a group of measurement time-domain information.

For a specific implementation process, reference may be made to the description of the at least two groups of measurement time-domain information in Embodiment 1 of UE, and details are not described herein.

Further, the configuration information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

For detailed description of the configuration parameters, reference may be made to the description of the configuration parameters in Embodiment 1 of UE.

Further, in step 703, that the base station receives an RRM measurement result reported by the UE may include:
the base station receives at least two the RRM measurement results that are separately reported by the UE; or
the base station receives some RRM measurement results selected by the UE from at least two the RRM measurement results; or
the base station receives an RRM measurement result obtained by combining, by the UE, at least two the RRM measurement results.

In an implementation manner, that the base station receives an RRM measurement result obtained by combining, by the UE, at least two the RRM measurement results may include:
the base station receives an RRM measurement result obtained by performing, by the UE, weighted averaging on at least two the RRM measurement results.

Specifically, the example shown in FIG. 2a is used for description. It is assumed that subframes represented by solid lines are corresponding to a first RRM measurement procedure 1, and that subframes represented by dashed lines are corresponding to a second RRM measurement procedure. The third small cell is steadily on, and therefore, when executing the first RRM measurement procedure, the UE discovers existence of the third small cell and performs RRM measurement on the third small cell. In addition, when executing the second RRM measurement procedure, the UE also discovers existence of the third small cell and performs RRM measurement on the third small cell. Interference levels are different in different measurement subframes. For example, in FIG. 2a, in the subframes corresponding to the first RRM measurement procedure, no signal transmission is performed in the first small cell or the second small cell, and therefore, DRS transmission in the third small cell receives no interference from the two cells. However, in the subframes corresponding to the second RRM measurement procedure, transmission in the third small cell receives interference from the first small cell and the second small cell. Therefore, the measurement results obtained by using the two RRM measurement procedures are different.

In this case, with respect to a measurement result of the third small cell, the base station may instruct the UE to perform result reporting by using any one of the following three processing methods:
Manner 1. Instruct the UE to report both measurement results of the third small cell obtained by using the two procedures.
Manner 2. Instruct the UE to report, according to an instruction of the base station, only a measurement result obtained by using the first RRM measurement procedure.
Manner 3. Instruct the UE to report, according to an instruction of the base station, a combination of results obtained by using the two procedures. For example, the UE may report a weighted average of the two RRM measurement results to the base station. For example, M = 0.9M1 + 0.1M2 is used, where M is a result finally reported, M1 is a measurement result obtained by using the first RRM measurement procedure, and M2 is a measurement result obtained by using the second RRM measurement procedure.

The base station may configure in advance a manner for the UE to report the RRM measurement result of the third small cell, or may instruct the UE in real time which manner is to be used for reporting.

Optionally, in another possible implementation manner, the measurement parameter information includes a list of cells that may be measured; and
step 703 may be:
the base station receives an RRM measurement result, in the RRM measurement results obtained by means of measurement, of a cell belonging to the list of cells that may be measured, where the UE reports only the RRM measurement result.

In specific implementation, configuration information of the RRM measurement procedures delivered to the UE by the base station includes the list of cells that may be measured (NeighCellList). Optionally, after configuring multiple RRM measurement procedures in advance, the base station may set one or more of the procedures so that a cell outside the NeighCellList is not measured even if the cell is discovered, or even if a cell outside the NeighCellList is measured, a measurement result of the cell is not reported. The example in FIG. 2a is still used as an example. The first small cell, the second small cell, and the third small cell can be discovered by using the second RRM measurement procedure (the subframes represented by dashed lines). According to the method in this embodiment, the list of cells that may be measured may be set to be the first small cell and the second small cell, that is, only the first small cell and the second small cell are defined as target cells. Therefore, in measurement corresponding to the second RRM measurement procedure, measurement is not performed even if the UE has discovered the third small cell. Alternatively, it may be defined that a measurement result of the third small cell is not reported.

In this embodiment, a base station configures for a carrier at least two radio resource management RRM measurement procedures that are independent of each other, where configuration information of each RRM measurement procedure includes a group of measurement time-domain information and corresponding measurement parameter information; sends, to UE, the configuration information of the at least two RRM measurement procedures that are independent of each other, so that the UE uses the at least two radio resource management RRM measurement procedures that are independent of each other to perform RRM measurement on each carrier; and then receives an RRM measurement result reported by the UE. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

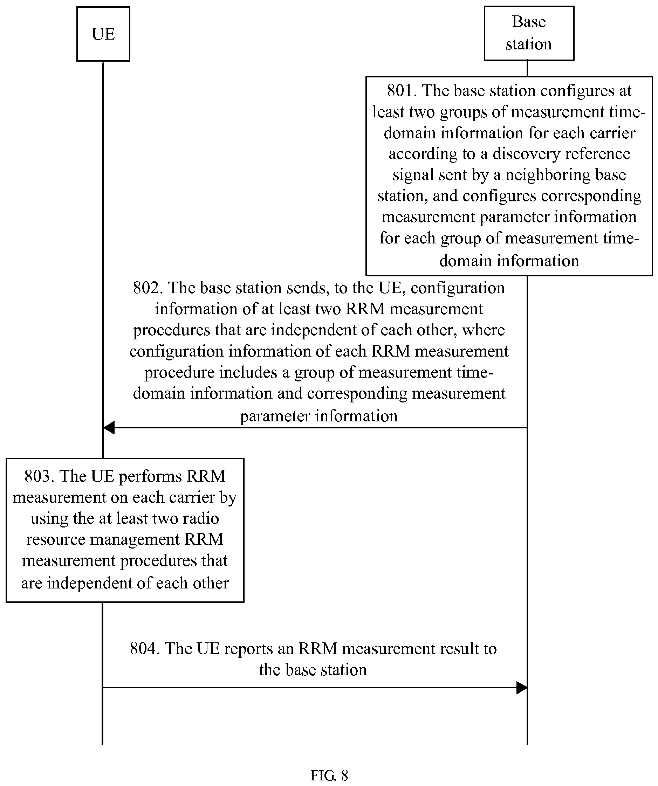

FIG. 8 is an interaction flowchart of Embodiment 3 of a neighboring cell measurement method according to the present invention. This embodiment describes the neighboring cell measurement method implemented by means of interaction between UE and a base station. The UE in this embodiment may be the UE in the embodiment shown in FIG. 1 or FIG. 4, and the base station in this embodiment may be the base station in the embodiment shown in FIG. 3 or FIG. 5. As shown in FIG. 8, the method of this embodiment may include:
Step 801. The base station configures at least two groups of measurement time-domain information for each carrier according to a discovery reference signal sent by a neighboring base station, and configures corresponding measurement parameter information for each group of measurement time-domain information.

Each group of measurement time-domain information matches time-domain information of a discovery reference signal that is sent by at least one neighboring base station.

In specific implementation, the at least two groups of measurement time-domain information may include:
at least two sets of measurement subframes that are configured for each carrier by the base station, where each set of measurement subframes is a group of measurement time-domain information; or
at least two subsets divided from the set of measurement subframes that is configured for each carrier by the base station, where each subset is a group of measurement time-domain information; or
at least two measurement gaps that are configured for each carrier by the base station, where each measurement gap is a group of measurement time-domain information; or
at least two sub-gaps divided from the measurement gap by the base station, where each sub-gap is a group of measurement time-domain information.

For a specific implementation process, reference may be made to the description of the at least two groups of measurement time-domain information in Embodiment 1 of UE, and details are not described herein.

Further, the measurement parameter information includes at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

For detailed description of the configuration parameters, reference may be made to the description of the configuration parameters in Embodiment 1 of UE.

Step 802. The base station sends, to the UE, configuration information of at least two RRM measurement procedures that are independent of each other, where the configuration information of each RRM measurement procedure includes a group of measurement time-domain information and corresponding measurement parameter information.

Step 803. The UE performs RRM measurement on each carrier by using the at least two radio resource management RRM measurement procedures that are independent of each other.

Step 804: The UE reports an RRM measurement result to the base station.

In specific implementation, step 804 may include:
the UE reports at least two the RRM measurement results separately to the base station; or
the UE selects one RRM measurement result from at least two the RRM measurement results and reports the RRM measurement result to the base station; or
the UE reports a combination, for example, a weighted average, of at least two the RRM measurement results to the base station.

Optionally, in a possible implementation manner, the measurement parameter information includes a list of cells that may be measured, and step 804 may be: the UE reports only an RRM measurement result, in the RRM measurement results obtained by means of measurement, of a cell belonging to the list of cells that may be measured.

In this embodiment, UE receives configuration information, sent by a base station, of at least two RRM measurement procedures that are independent of each other; performs RRM measurement on one carrier by using the at least two RRM measurement procedures that are independent of each other, and obtains at least two RRM measurement results; and reports the RRM measurement results to the base station. The at least two RRM measurement procedures that are independent of each other may be configured with respect to different neighboring cells, and therefore, measurement time-domain information corresponding to each RRM measurement procedure matches time-domain information of an RRM measurement reference signal that is sent by a to-be-measured neighboring cell. Therefore, a neighboring cell in which an RRM measurement reference signal is not continuously sent can be measured, so as to obtain an accurate result of neighboring cell discovery and neighboring cell measurement.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. User equipment, UE, comprising:
a receiving module (101), configured to receive configuration information, sent by a base station, of at least two radio resource management, RRM, measurement procedures that are independent of each other;
a measurement module (102), configured to perform RRM measurement on one carrier by using the at least two RRM measurement procedures that are independent of each other, and obtain at least two RRM measurement results; and
a sending module (103), configured to report the RRM measurement results to the base station,
wherein
the configuration information of each RRM measurement procedure comprises a group of measurement time-domain information and corresponding measurement parameter information; and
the receiving module (101) is specifically configured to receive at least two groups of measurement time-domain information and measurement parameter information corresponding to each group of measurement time-domain information that are sent by the base station,
wherein the at least two groups of measurement time-domain information comprise:
at least two measurement gaps that are configured for each carrier by the base station, wherein each measurement gap is a group of measurement time-domain information.

2. User equipment, UE, comprising:
a receiving module (101), configured to receive configuration information, sent by a base station, of at least two radio resource management, RRM, measurement procedures that are independent of each other;
a measurement module (102), configured to perform RRM measurement on one carrier by using the at least two RRM measurement procedures that are independent of each other, and obtain at least two RRM measurement results; and
a sending module (103), configured to report the RRM measurement results to the base station,
wherein
the configuration information of each RRM measurement procedure comprises a group of measurement time-domain information and corresponding measurement parameter information; and
the receiving module (101) is specifically configured to receive at least two groups of measurement time-domain information and measurement parameter information corresponding to each group of measurement time-domain information that are sent by the base station,
wherein the at least two groups of measurement time-domain information comprise:
at least two sub-gaps divided from a measurement gap by the base station, wherein each sub-gap is a group of measurement time-domain information.

3. The UE according to any one of claims 1 to 2, wherein the sending module is specifically configured to:
separately report at least two the RRM measurement results to the base station; or
select one RRM measurement result from at least two the RRM measurement results and report the RRM measurement result to the base station; or
report a combination of at least two the RRM measurement results to the base station.

4. The UE according to claim 3, wherein the sending module is specifically configured to:
report a weighted average of at least two the RRM measurement results to the base station.

5. The UE according to any one of claims 1 to 4, wherein
the measurement parameter information comprises a list of cells that may be measured; and
the sending module is specifically configured to:
report to the base station, only an RRM measurement result, in the RRM measurement results obtained by means of measurement, of a cell belonging to the list of cells that may be measured.

6. The UE according to any one of claims 1 to 4, wherein the measurement parameter information comprises at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

7. A base station, comprising:
a configuration module (301), configured to configure for one carrier at least two radio resource management ,RRM, measurement procedures that are independent of each other, wherein configuration information of each RRM measurement procedure comprises a group of measurement time-domain information and corresponding measurement parameter information;
a sending module (302), configured to send, to user equipment, UE, the configuration information of the at least two RRM measurement procedures that are independent of each other; and
a receiving module (303), configured to receive an RRM measurement result reported by the UE,
wherein the configuration module (301) is specifically configured to: configure at least two groups of measurement time-domain information for each carrier according to a discovery reference signal sent by a neighboring base station, and configure corresponding measurement parameter information for each group of measurement time-domain information,
wherein the configuration module (301) is specifically configured to:
configure at least two measurement gaps for each carrier, and use each measurement gap as a group of measurement time-domain information.

8. A base station, comprising:
a configuration module (301), configured to configure for one carrier at least two radio resource management ,RRM, measurement procedures that are independent of each other, wherein configuration information of each RRM measurement procedure comprises a group of measurement time-domain information and corresponding measurement parameter information;
a sending module (302), configured to send, to user equipment, UE, the configuration information of the at least two RRM measurement procedures that are independent of each other; and
a receiving module (303), configured to receive an RRM measurement result reported by the UE,
wherein the configuration module (301) is specifically configured to: configure at least two groups of measurement time-domain information for each carrier according to a discovery reference signal sent by a neighboring base station, and configure corresponding measurement parameter information for each group of measurement time-domain information,
wherein the configuration module (301) is specifically configured to:
divide at least two sub-gaps from a measurement gap, and use each sub-gap as a group of measurement time-domain information.

9. The base station according to any one of claims 7 to 8, wherein the receiving module is specifically configured to:
receive at least two the RRM measurement results that are separately reported by the UE; or
receive some RRM measurement results selected by the UE from at least two the RRM measurement results; or
receive an RRM measurement result obtained by combining, by the UE, at least two the RRM measurement results.

10. The base station according to claim 9, wherein the receiving module is specifically configured to:
receive an RRM measurement result obtained by performing, by the UE, weighted averaging on at least two the RRM measurement results.

11. The base station according to any one of claims 7 to 10, wherein
the measurement parameter information comprises a list of cells that may be measured; and
the receiving module is specifically configured to:
receive an RRM measurement result, in the RRM measurement results obtained by means of measurement, of a cell belonging to the list of cells that may be measured, wherein the UE reports only the RRM measurement result.

12. The base station according to any one of claims 7 to 10, wherein the configuration information comprises at least one of the following parameters: a measurement bandwidth, a list of cells that may be measured, a cell blacklist, a threshold for event-triggered reporting, a report interval, a report metric, a report event driving metric, a maximum quantity of cells to report, a layer 3 filter parameter setting, or whether a CRS antenna port 1 is present.

## Patentansprüche

1. Endgerät, UE, umfassend:
ein Empfangsmodul (101), das konfiguriert ist, von einer Basisstation gesendete Konfigurationsinformationen von mindestens zwei Funkressourcenverwaltungs-Messverfahren, RRM-Messverfahren, zu empfangen, die voneinander unabhängig sind;
ein Messmodul (102), das konfiguriert ist, eine RRM-Messung an einem Träger unter Verwendung der mindestens zwei RRM-Messverfahren durchzuführen, die voneinander unabhängig sind, und mindestens zwei RRM-Messergebnisse zu erhalten; und
ein Sendemodul (103), das konfiguriert ist, der Basisstation die RRM-Messergebnisse zu melden,
wobei
die Konfigurationsinformationen jedes RRM-Messverfahrens eine Gruppe von Messzeitdomäneninformationen und entsprechende Messparameterinformationen umfassen; und
das Empfangsmodul (101) insbesondere konfiguriert ist, mindestens zwei Gruppen von Messzeitdomäneninformationen und jeder Gruppe von Messzeitdomäneninformationen entsprechende Messparameterinformationen zu empfangen, die von der Basisstation gesendet werden,
wobei die mindestens zwei Gruppen von Messzeitdomäneninformationen umfassen:
mindestens zwei Messlücken, die für jeden Träger durch die Basisstation konfiguriert sind, wobei jede Messlücke eine Gruppe von Messzeitdomäneninformationen ist.

2. Endgerät, UE, umfassend:
ein Empfangsmodul (101), das konfiguriert ist, von einer Basisstation gesendete Konfigurationsinformationen von mindestens zwei Funkressourcenverwaltungs-Messverfahren, RRM-Messverfahren, zu empfangen, die voneinander unabhängig sind;
ein Messmodul (102), das konfiguriert ist, eine RRM-Messung an einem Träger unter Verwendung der mindestens zwei RRM-Messverfahren durchzuführen, die voneinander unabhängig sind, und mindestens zwei RRM-Messergebnisse zu erhalten; und
ein Sendemodul (103), das konfiguriert ist, der Basisstation die RRM-Messergebnisse zu melden,
wobei
die Konfigurationsinformationen jedes RRM-Messverfahrens eine Gruppe von Messzeitdomäneninformationen und entsprechende Messparameterinformationen umfassen; und
das Empfangsmodul (101) insbesondere konfiguriert ist, mindestens zwei Gruppen von Messzeitdomäneninformationen und jeder Gruppe von Messzeitdomäneninformationen entsprechende Messparameterinformationen zu empfangen, die von der Basisstation gesendet werden,
wobei die mindestens zwei Gruppen von Messzeitdomäneninformationen umfassen:
mindestens zwei Teillücken, in die eine Messlücke durch die Basisstation aufgeteilt wurde, wobei jede Teillücke eine Gruppe von Messzeitdomäneninformationen ist.

3. UE nach einem der Ansprüche 1 bis 2, wobei das Sendemodul insbesondere konfiguriert ist:
der Basisstation mindestens zwei der RRM-Messergebnisse getrennt zu melden; oder
ein RRM-Messergebnis aus mindestens zwei der RRM-Messergebnisse auszuwählen und der Basisstation das RRM-Messergebnis zu melden; oder
der Basisstation eine Kombination von mindestens zwei der RRM-Messergebnisse zu melden.

4. UE nach Anspruch 3, wobei das Sendemodul insbesondere konfiguriert ist:
der Basisstation ein gewichtetes Mittel von mindestens zwei der RRM-Messergebnisse zu melden.

5. UE nach einem der Ansprüche 1 bis 4, wobei
die Messparameterinformationen eine Liste von Zellen umfassen, die gemessen werden können; und
das Sendemodul insbesondere konfiguriert ist:
der Basisstation nur ein RRM-Messergebnis aus den mithilfe einer Messung erhaltenen RRM-Messergebnissen einer Zelle zu melden, die zur Liste der Zellen gehört, die gemessen werden können.

6. UE nach einem der Ansprüche 1 bis 4, wobei die Messparameterinformationen mindestens einen der folgenden Parameter umfassen: eine Messbandbreite, eine Liste der Zellen, die gemessen werden können, eine schwarze Liste von Zellen, einen Schwellenwert für ereignisgesteuerte Meldungen, ein Meldeintervall, eine Meldemetrik, eine berichtsereignisgetriebene Metrik, eine Maximalmenge an Zellen, die zu melden sind, eine Filterparametereinstellung auf Ebene 3 oder, ob ein CRS-Antennenanschluss 1 vorhanden ist.

7. Basisstation, umfassend:
ein Konfigurationsmodul (301), das konfiguriert ist, für einen Träger mindestens zwei Funkressourcenverwaltungs-Messverfahren, RRM-Messverfahren, zu konfigurieren, die voneinander unabhängig sind, wobei die Konfigurationsinformationen jedes RRM-Messverfahrens eine Gruppe von Messzeitdomäneninformationen und entsprechende Messparameterinformationen umfassen;
ein Sendemodul (302), das konfiguriert ist, die Konfigurationsinformationen der mindestens zwei RRM-Messverfahren, die voneinander unabhängig sind, an das Endgerät, UE, zu senden; und
ein Empfangsmodul (303), das konfiguriert ist, ein vom UE gemeldetes RRM-Messergebnis zu empfangen,
wobei das Konfigurationsmodul (301) insbesondere konfiguriert ist: mindestens zwei Gruppen von Messzeitdomäneninformationen für jeden Träger nach einem von einer benachbarten Basisstation gesendeten Auffindungsbezugssignal zu konfigurieren, und entsprechende Messparameterinformationen für jede Gruppe von Messzeitdomäneninformationen zu konfigurieren,
wobei das Konfigurationsmodul (301) insbesondere konfiguriert ist:
mindestens zwei Messlücken für jeden Träger zu konfigurieren und jede Messlücke als eine Gruppe von Messzeitdomäneninformationen zu verwenden.

8. Basisstation, umfassend:
ein Konfigurationsmodul (301), das konfiguriert ist, für einen Träger mindestens zwei Funkressourcenverwaltungs-Messverfahren, RRM-Messverfahren, zu konfigurieren, die voneinander unabhängig sind, wobei die Konfigurationsinformationen jedes RRM-Messverfahrens eine Gruppe von Messzeitdomäneninformationen und entsprechende Messparameterinformationen umfassen;
ein Sendemodul (302), das konfiguriert ist, die Konfigurationsinformationen der mindestens zwei RRM-Messverfahren, die voneinander unabhängig sind, an das Endgerät, UE, zu senden; und
ein Empfangsmodul (303), das konfiguriert ist, ein vom UE gemeldetes RRM-Messergebnis zu empfangen,
wobei das Konfigurationsmodul (301) insbesondere konfiguriert ist: mindestens zwei Gruppen von Messzeitdomäneninformationen für jeden Träger nach einem von einer benachbarten Basisstation gesendeten Auffindungsbezugssignal zu konfigurieren, und entsprechende Messparameterinformationen für jede Gruppe von Messzeitdomäneninformationen zu konfigurieren,
wobei das Konfigurationsmodul (301) insbesondere konfiguriert ist:
eine Messlücke in mindestens zwei Teillücken aufzuteilen und jede Teillücke als eine Gruppe von Messzeitdomäneninformationen zu verwenden.

9. Basisstation nach einem der Ansprüche 7 bis 8, wobei das Empfangsmodul insbesondere konfiguriert ist:
mindestens zwei der RRM-Messergebnisse zu empfangen, die getrennt vom UE gemeldet werden; oder
einige RRM-Messergebnisse zu empfangen, die vom UE aus mindestens zwei der RRM-Messergebnisse ausgewählt wurden; oder
ein RRM-Messergebnis zu empfangen, das vom UE durch Kombinieren von mindestens zwei der RRM-Messergebnisse erhalten wurde.

10. Basisstation nach Anspruch 9, wobei das Empfangsmodul insbesondere konfiguriert ist:
ein RRM-Messergebnis zu empfangen, das vom UE durch Durchführen einer gewichteten Mittelung von mindestens zwei der RRM-Messergebnisse erhalten wurde.

11. Basisstation nach einem der Ansprüche 7 bis 10, wobei
die Messparameterinformationen eine Liste von Zellen umfassen, die gemessen werden können; und
das Empfangsmodul insbesondere konfiguriert ist:
ein RRM-Messergebnis aus den mithilfe einer Messung erhaltenen RRM-Messergebnissen einer Zelle zu empfangen, die zur Liste der Zellen gehört, die gemessen werden können, wobei das UE nur das RRM-Messergebnis meldet.

12. Basisstation nach einem der Ansprüche 7 bis 10, wobei die Konfigurationsinformationen mindestens einen der folgenden Parameter umfassen:
eine Messbandbreite, eine Liste der Zellen, die gemessen werden können, eine schwarze Liste von Zellen, einen Schwellenwert für ereignisgesteuerte Meldungen, ein Meldeintervall, eine Meldemetrik, eine berichtsereignisgetriebene Metrik, eine Maximalmenge an Zellen, die zu melden sind, eine Filterparametereinstellung auf Ebene 3 oder ob ein CRS-Antennenanschluss 1 vorhanden ist.

## Revendications

1. Équipement d'utilisateur (UE), comprenant :
un module de réception (101), conçu pour recevoir des informations de configuration, envoyées par une station de base, d'au moins deux procédures de mesure de gestion de ressources radio (RRM) qui sont indépendantes l'une de l'autre ;
un module de mesure (102), conçu pour réaliser une mesure RRM sur une porteuse au moyen des au moins deux procédures de mesure RRM qui sont indépendantes l'une de l'autre, et obtenir au moins deux résultats de mesure RRM ; et
un module d'envoi (103), conçu pour signaler les résultats de mesure RRM à la station de base,
dans lequel
les informations de configuration de chaque procédure de mesure RRM comprennent un groupe d'informations de mesure dans le domaine temporel et d'informations correspondantes de paramètre de mesure ; et
le module de réception (101) est spécifiquement conçu pour recevoir au moins deux groupes d'informations de mesure dans le domaine temporel et d'informations de paramètre de mesure correspondant à chaque groupe d'informations de mesure dans le domaine temporel qui sont envoyées par la station de base,
les au moins deux groupes d'informations de mesure dans le domaine temporel comprenant :
au moins deux espaces de mesure configurés pour chaque porteuse par la station de base, chaque espace de mesure étant un groupe d'informations de mesure dans le domaine temporel.

2. Équipement d'utilisateur (UE), comprenant :
un module de réception (101), conçu pour recevoir des informations de configuration, envoyées par une station de base, d'au moins deux procédures de mesure de gestion de ressources radio (RRM) qui sont indépendantes l'une de l'autre ;
un module de mesure (102), conçu pour réaliser une mesure RRM sur une porteuse au moyen des au moins deux procédures de mesure RRM qui sont indépendantes l'une de l'autre, et obtenir au moins deux résultats de mesure RRM ; et
un module d'envoi (103), conçu pour signaler les résultats de mesure RRM à la station de base,
dans lequel
les informations de configuration de chaque procédure de mesure RRM comprennent un groupe d'informations de mesure dans le domaine temporel et d'informations correspondantes de paramètre de mesure ; et
le module de réception (101) est spécifiquement conçu pour recevoir au moins deux groupes d'informations de mesure dans le domaine temporel et d'informations de paramètre de mesure correspondant à chaque groupe d'informations de mesure dans le domaine temporel qui sont envoyées par la station de base,
les au moins deux groupes d'informations de mesure dans le domaine temporel comprenant :
au moins deux sous-espaces divisés par la station de base à partir d'un espace de mesure, chaque sous-espace étant un groupe d'informations de mesure dans le domaine temporel.

3. UE selon l'une quelconque des revendications 1 et 2, dans lequel le module d'envoi est spécifiquement conçu pour :
signaler séparément à la station de base au moins deux des résultats de mesure RRM ; ou
sélectionner un résultat de mesure RRM parmi au moins deux des résultats de mesure RRM et signaler le résultat de mesure RRM à la station de base ; ou
signaler à la station de base une combinaison d'au moins deux des résultats de mesure RRM.

4. UE selon la revendication 3, dans lequel le module d'envoi est spécifiquement conçu pour :
signaler à la station de base une moyenne pondérée d'au moins deux des résultats de mesure RRM.

5. UE selon l'une quelconque des revendications 1 à 4, dans lequel :
les informations de paramètre de mesure comprennent une liste de cellules qui peuvent être mesurées ; et
le module d'envoi est spécifiquement conçu pour :
signaler à la station de base uniquement un résultat de mesure RRM, parmi les résultats de mesure RRM obtenus au moyen d'une mesure, d'une cellule appartenant à la liste de cellules qui peuvent être mesurées.

6. UE selon l'une quelconque des revendications 1 à 4, dans lequel les informations de paramètre de mesure comprennent au moins un des paramètres suivants : une bande passante de mesure, une liste de cellules qui peuvent être mesurées, une liste noire de cellules, un seuil de signalement déclenché sur événement, un intervalle de signalement, un indicateur de signalement, un indicateur de signalement commandé sur événement, une quantité maximale de cellules à signaler, un réglage de paramètre de filtre de couche 3 ou la présence ou non d'un port d'antenne CRS 1.

7. Station de base, comprenant :
un module de configuration (301), conçu pour configurer pour une porteuse au moins deux procédures de mesure de gestion de ressources radio (RRM) qui sont indépendantes l'une de l'autre, les informations de configuration de chaque procédure de mesure RRM comprenant un groupe d'informations de mesure dans le domaine temporel et d'informations correspondantes de paramètre de mesure ;
un module d'envoi (302), conçu pour envoyer, à un équipement d'utilisateur (UE), les informations de configuration des au moins deux procédures de mesure RRM qui sont indépendantes l'une de l'autre ; et
un module de réception (303), conçu pour recevoir un résultat de mesure RRM signalé par l'UE,
le module de configuration (301) étant spécifiquement conçu pour :
configurer au moins deux groupes d'informations de mesure dans le domaine temporel pour chaque porteuse selon un signal de référence de découverte envoyé par une station de base voisine, et configurer des informations correspondantes de paramètre de mesure pour chaque groupe d'informations de mesure dans le domaine temporel,
le module de configuration (301) étant spécifiquement conçu pour :
configurer au moins deux espaces de mesure pour chaque porteuse, et utiliser chaque espace de mesure en tant que groupe d'informations de mesure dans le domaine temporel.

8. Station de base, comprenant :
un module de configuration (301), conçu pour configurer pour une porteuse au moins deux procédures de mesure de gestion de ressources radio (RRM) qui sont indépendantes l'une de l'autre, les informations de configuration de chaque procédure de mesure RRM comprenant un groupe d'informations de mesure dans le domaine temporel et d'informations correspondantes de paramètre de mesure ;
un module d'envoi (302), conçu pour envoyer, à un équipement d'utilisateur (UE), les informations de configuration des au moins deux procédures de mesure RRM qui sont indépendantes l'une de l'autre ; et
un module de réception (303), conçu pour recevoir un résultat de mesure RRM signalé par l'UE,
le module de configuration (301) étant spécifiquement conçu pour :
configurer au moins deux groupes d'informations de mesure dans le domaine temporel pour chaque porteuse selon un signal de référence de découverte envoyé par une station de base voisine, et configurer des informations correspondantes de paramètre de mesure pour chaque groupe d'informations de mesure dans le domaine temporel,
le module de configuration (301) étant spécifiquement conçu pour :
diviser au moins deux sous-espaces à partir d'un espace de mesure, et utiliser chaque sous-espace en tant que groupe d'informations de mesure dans le domaine temporel.

9. Station de base selon l'une quelconque des revendications 7 et 8, dans laquelle le module de réception est spécifiquement conçu pour :
recevoir au moins deux des résultats de mesure RRM qui sont signalés séparément par l'UE ; ou
recevoir certains résultats de mesure RRM sélectionnés par l'UE parmi au moins deux des résultats de mesure RRM ; ou
recevoir un résultat de mesure RRM obtenu en combinant, par l'UE, au moins deux des résultats de mesure RRM.

10. Station de base selon la revendication 9, dans laquelle le module de réception est spécifiquement conçu pour :
recevoir un résultat de mesure RRM obtenu en réalisant, par l'UE, une moyenne pondérée d'au moins deux des résultats de mesure RRM.

11. Station de base selon l'une quelconque des revendications 7 à 10, dans laquelle :
les informations de paramètre de mesure comprennent une liste de cellules qui peuvent être mesurées ; et
le module de réception est spécifiquement conçu pour :
recevoir un résultat de mesure RRM, parmi les résultats de mesure RRM obtenus au moyen d'une mesure, d'une cellule appartenant à la liste de cellules qui peuvent être mesurées, l'UE signalant uniquement le résultat de mesure RRM.

12. Station de base selon l'une quelconque des revendications 7 à 10, dans laquelle les informations de configuration comprennent au moins un des paramètres suivants : une bande passante de mesure, une liste de cellules qui peuvent être mesurées, une liste noire de cellules, un seuil de signalement déclenché sur événement, un intervalle de signalement, un indicateur de signalement, un indicateur de signalement commandé sur événement, une quantité maximale de cellules à signaler, un réglage de paramètre de filtre de couche 3 ou la présence ou non d'un port d'antenne CRS 1.
